# EUROPEAN PATENT APPLICATION

(11) **EP 2 173 064 A1**
(43) Date of publication of application: **07.04.2010**
(21) Application number: 08790212.8
(22) Date of filing: 16.07.2008
(51) Int. Cl.: H04L 12/28, H04W 8/02, H04W 4/00

(54) **COMMUNICATION METHOD AND WIRELESS DEVICE USING THE SAME**

(30) Priority: 19.07.2007 JP 2007188420
(71) Applicant: Sanyo Electric Co., Ltd., Osaka 570-8677 (JP)
(72) Inventor: NAKAOKA, Ken, Ichinomiya-shi Aichi 491-0111 (JP)
(74) Representative: Pisani, Diana Jean
(86) International application number: PCT/JP2008/001910
(87) International publication number: WO 2009/011124

(57) **Abstract**

A packet receiver (20) receives an instruction, sent from other radio apparatuses, as to the transfer mode used when data signals received from the other radio apparatuses are to be forwarded. A setting unit (24) sets the transfer mode based on the instruction received. The setting unit (24) sets a primary transfer mode or a secondary transfer mode as the transfer mode. The probability of carrying out a transfer by a packet generator (28) and a packet transmitter (22) under the primary transfer mode is defined to be higher than that under the secondary transfer mode. The packet generator (28) and the packet transmitter (22) transfer the data signals received from the other radio apparatuses, according to the transfer modes respectively set.

## Description

### TECHNICAL FIELD

The present invention relates to a communication technique, and it particularly relates to a communication method for transferring data signals received from other radio apparatuses and a radio apparatus using said communication method.

### BACKGROUND TECHNOLOGY

A collision avoidance system employed for the purpose of reducing the number of vehicle accidents has been attracting attentions. In the collision avoidance system, each vehicle is equipped with a radio apparatus compatible with an inter-vehicle communication system, and the radio apparatuses communicate the information on their own vehicles and their traveling speeds with each other. Packet flooding is used in the inter-vehicle communication system.

### DISCLOSURE OF THE INVENTION

### PROBLEMS TO BE SOLVED BY THE INVENTION

In the packet flooding, a radio apparatus, which is to transmit predetermined data, transmits a packet signal by broadcast. A radio apparatus, which have received this packet signal, transmits again the packet signal by broadcast. In this manner, the transfer of the packet signal is repeated, so that a radio apparatus to which the packet signal is destined receives the predetermined data. However, since the packet signal is transmitted by broadcast, the increased number of forwardings (transfers) results in a rapid increase in the traffic volume. With the increase in the traffic volume, the collision probability of packet signals also increases. In particular, when the packet flooding is used in the inter-vehicle communication system, the traffic volume of packet signals increases in a road where vehicular traffic is congested.

The present invention has been made in view of such circumstances and a purpose thereof is to provide a communication technique by which to reduce the increase in the traffic volume when the packet signals are transferred.

### MEANS FOR SOLVING THE PROBLEMS

In order to resolve the above problems, a radio apparatus according to one embodiment of the present invention comprises: a receiving unit configured to receive an instruction, sent from another radio apparatus, as to a transfer mode used when a data signal received from the another radio apparatus is to be transferred; a setting unit configured to set the transfer mode based on the instruction received by the receiving unit; and a communication unit configured to transfer the data signal received from the another radio apparatus, according to the transfer mode set by the setting unit. The setting unit sets a primary transfer mode or a secondary transfer mode as the transfer mode, and the probability of carrying out a transfer by the communication unit is set so that the probability thereof in the primary transfer mode is higher than that in the secondary transfer mode.

Another embodiment of the present invention relates to a communication method. This method comprises: receiving an instruction, sent from another radio apparatus, as to a transfer mode used when a data signal received from the another radio apparatus is to be transferred; setting the transfer mode based on the received instruction received; and transferring the data signal received from the another radio apparatus, according to the transfer mode set by the setting. The setting sets a primary transfer mode or a secondary transfer mode as the transfer mode, and the probability of carrying out a transfer in the transferring is set so that the probability thereof in the primary transfer mode is higher than that in the secondary transfer mode.

Optional combinations of the aforementioned constituting elements, and implementations of the invention in the form of methods, apparatuses, systems, recording mediums, computer programs and so forth may also be effective as additional modes of the present invention.

### EFFECT OF THE INVENTION

When packet signals are transferred, an increase in the traffic volume can be suppressed.

### BRIEF DESCRIPTION OF THE DRAWINGS

FIG. 1 shows a structure of a communication system according to an exemplary embodiment of the present invention.
FIG. 2 shows a structure of a radio apparatus of FIG. 1.
FIGS. 3A and 3B show packet formats in a communication system of FIG. 1.
FIG. 4 shows a data structure of a peripheral node information table stored in a storage of FIG. 2.
FIG. 5 is a sequence diagram showing a procedure for transmitting a hello packet in a communication system of FIG. 1.
FIG. 6 is a sequence diagram showing a procedure for transferring a data packet in a communication system of FIG. 1.
FIG. 7 is a flowchart showing a communication procedure in a radio apparatus of FIG. 2.
FIG. 8 is a flowchart showing a procedure for transmitting a hello packet in a radio apparatus of FIG. 2.
FIG. 9 is a flowchart showing a procedure for setting a transfer mode in a radio apparatus of FIG. 2.
FIG. 10 is a flowchart showing a transfer procedure in a radio apparatus of FIG. 2.
FIG. 11 is a flowchart showing a procedure for transferring a data packet in a radio apparatus of FIG. 2.
FIG. 12 shows a format of NACK packet in a communication system according to a modification.
FIG. 13 is a sequence diagram showing a retransmission procedure in a communication system according to a modification.
FIG. 14 is a flowchart showing a procedure for transmitting a NACK packet in a radio apparatus according to a modification.
FIG. 15 is a flowchart showing a procedure for storing a data packet in a radio apparatus according to a modification.
FIG. 16 is a flowchart showing a procedure for transferring a data packet in a radio apparatus according to a modification.
FIG. 17 is a flowchart showing another procedure for transferring a data packet in a radio apparatus according to a modification.

### DESCRIPTION OF THE REFERENCE NUMERALS

- 10: Radio apparatus
- 12: Communication unit
- 14: Packet processing unit
- 16: Storage
- 18: Control unit
- 20: Packet receiver
- 22: Packet transmitter
- 24: Setting unit
- 26: Decision unit
- 28: Packet generator
- 100: Communication system

### BEST MODE FOR CARRYING OUT THE INVENTION

An outline of the present invention will be given before a specific description thereof. Exemplary embodiments of the present invention relate to a communication system comprised of a plurality of radio apparatuses. A plurality of radio apparatuses, which are installed in vehicles such as automobiles, respectively, communicate predetermined data with one another. It is presupposed here that the predetermined data are images or the like picked up by cameras and it is also assumed that each vehicle is equipped with a camera. Note that each of the plurality of radio apparatuses has an equal relationship with one another and transmits a packet signal containing data (hereinafter referred to as "data packet") by broadcast. A radio apparatus that has received a data packet transmits the data packet by broadcast. In other words, a packet flooding is executed to transfer the data packet. Under such circumstances, the traffic volume of data packets increases in an area where the vehicular traffic is heavy and congested. The increase in the traffic volume of data packets entails the occurrence of collisions between the data packets and therefore the throughput tends to drop. In order to address such a problem, the communication system according to the present exemplary embodiment carries out the following processing.

Before the transmission of data packets, each radio apparatus broadcasts a packet used to broadcast information on its own apparatus and the presence of its own apparatus (hereinafter, this packet will be referred to as "hello packet"). A hello packet contains the information on the position of its own vehicle, the traveling speed thereof, and the like. Each radio apparatus recognizes the presence of other radio apparatuses by receiving hello packets sent from the other radio apparatuses. Based on the received hello packets, the radio apparatus sets an operation performed at the time when the data packet sent from another radio apparatus is received. Here, the operation is defined as a transfer (forwarding) mode wherein a primary transfer mode and a secondary transfer mode are defined in the transfer mode. The transfer mode corresponds to the probability of carrying out a transfer of a data packet sent from another radio packet and is defined so that the transfer probability in the primary transfer mode is higher than that in the secondary transfer mode. For example, the transfer probability of the primary transfer mode is defined to be "100%", whereas the probability of the secondary transfer mode is defined to be "20%".

For example, a radio apparatus sets the primary transfer mode for radio apparatuses located at a long distance away therefrom, and sets the secondary mode for radio apparatuses other than said radio apparatuses located at a certain distance. The radio apparatus conveys the set content to the other radio apparatuses via a hello packet. Accordingly, each radio apparatus can recognize that it is set to the primary transfer mode in the other radio apparatuses. Then, as the radio apparatus receives a data packet from the other radio apparatuses, it verifies whether the primary transfer mode has been set in the other radio apparatuses or not. If the radio apparatus is set to the primary transfer mode, the radio apparatus will transfer the data packet. If, on the other hand, it is set to the secondary transfer mode, it will transfer the data packet with a transfer probability according to the secondary transfer mode. In this manner, not all data packets are transferred, so that the increase in the traffic amount can be restricted.

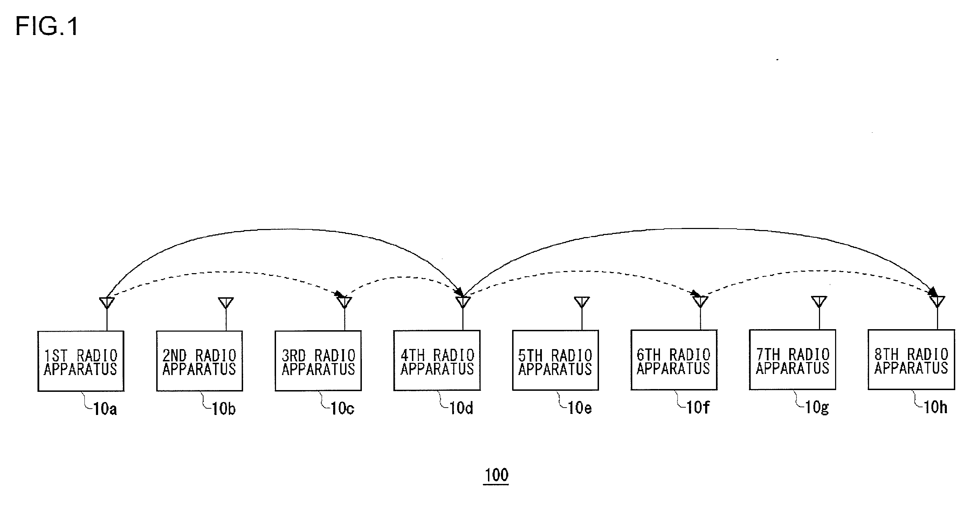

FIG. 1 shows a structure of a communication system 100 according to an exemplary embodiment of the present invention. The communication system 100 includes a first radio apparatus 10a, a second radio apparatus 10b, a third radio apparatus 10c, a fourth radio apparatus 10d, a fifth radio apparatus 10e, a sixth radio apparatus 10f, a seventh radio apparatus 10g, and an eighth radio apparatus 10h, which are generically referred to as radio apparatus 10 or radio apparatuses 10. Each radio apparatus 10 is installed in a not-shown vehicle, and performs inter-vehicle communications with other radio communication apparatuses 10. Since data packets are transmitted by broadcast in the communication system 100, the data packets are transmitted in all directions. However, for the clarity of explanation in FIG. 1, it is assumed here that the data packet is transferred from left to right in FIG. 1, namely in the direction from the first radio apparatus 10a toward the eighth radio apparatus 10h.

Prior to the transmission of the data packet, each radio apparatus broadcasts the hello packet. Also, each radio apparatus sets a transfer mode for other radio apparatuses, based on the received hello packet. For example, as the first radio apparatus 10a receives the hello packets from the second radio apparatus 10b through the fourth radio apparatus 10d, respectively, in FIG. 1, the first radio apparatus 10a sets the fourth radio apparatus 10d to the primary transfer mode and sets the third radio apparatus 10c to the secondary transfer mode. On the other hand, the fourth radio apparatus 10d sets the eighth radio apparatus 10h to the primary transfer mode and sets the sixth radio apparatus 10f to the secondary transfer mode.
As described above, assume herein that the data packet is transferred with the probability of "100%" in the primary transfer mode, whereas it is transferred with the probability of "20%" in the secondary transfer mode. Furthermore, as described above, these set contents are conveyed by the hello packet as well.

The first radio apparatus 10a transmits data packets by broadcast. In so doing, the first radio apparatus 10a has the information on the first radio apparatus 10a contained in the data packet as the information on a source (sender). Upon receipt of the data packet, the second radio apparatus 10b through the fourth radio apparatus 10d each checks the information on a source contained in the data packet. As a result, each radio apparatus 10 recognizes a radio apparatus 10 corresponding to the information on a sender, that is, each radio apparatus 10 recognizes which transfer mode has been set in the first radio apparatus 10a. For example, the fourth radio apparatus 10d recognizes that it is set to the primary transfer mode, and the third radio apparatus 10c recognizes that it is set to the secondary transfer mode.

Since the fourth radio apparatus 10d is set to the primary transfer mode in the first radio apparatus 10a, the fourth radio apparatus 10d transfers the data packet. In other words, the fourth radio apparatus 10d transmits the data packet by broadcast. At that time, the information on the fourth radio apparatus 10d is contained in the data packet as the information on the sender. As the fifth radio apparatus 10e through the eighth radio apparatus 10h receive the data packet, each of them executes the same operation as that described above. As a result of the above processing, the data packet transmitted from the first radio apparatus 10a is received by the eighth radio apparatus 10h by way of the fourth radio apparatus 10d which serves as a path corresponding to the primary transfer mode. Such a path as this is indicated by a solid line in FIG. 1. At the same time, the data packet transmitted from the first radio apparatus 10a is received by the eighth radio apparatus 10h by way of the third radio apparatus 10c, the fourth radio apparatus 10d and the sixth radio apparatus 10f which serve as paths corresponding to the secondary transfer mode. Such paths are indicated by a dotted line in FIG. 1.

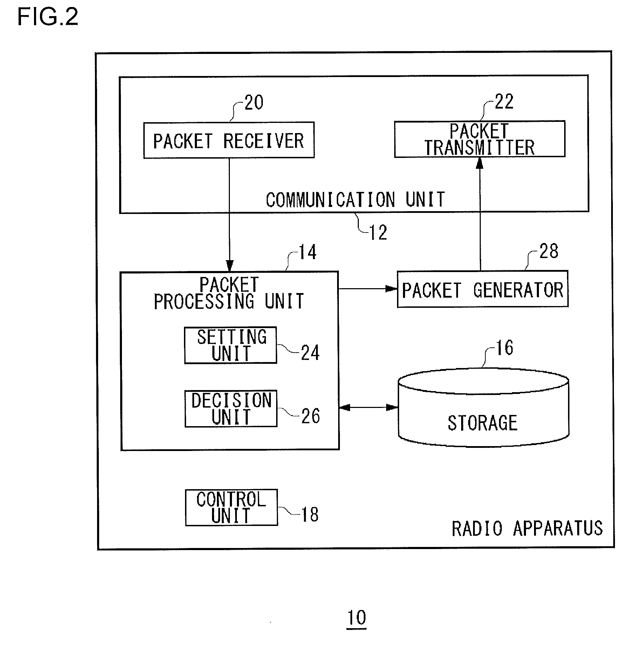

FIG. 2 shows a structure of a radio apparatus 10. The radio apparatus 10 includes a communication unit 12, a packet processing unit 14, a storage 16, a packet generator 28, and a control unit 18. The communication unit 12 includes a packet receiver 20 and a packet transmitter 22. The packet processing unit 14 includes a setting unit 24 and a decision unit 26. Assume here that the radio apparatus 10 is the fourth radio apparatus 10d and each of the other radio apparatuses 10 is structured similarly to the fourth radio apparatus 10d.

The packet receiver 20 receives a packet signal from not-shown other radio apparatuses 10. The packet receiver 20 performs a demodulation processing on the received packet signal. More specifically, since the received packet signal is a signal in the radiofrequency domain, the packet receiver 20 carries out frequency conversion of the packet signal from the radiofrequency domain into the baseband domain. Then packet receiver 20 performs a demodulation processing and a decoding processing so as to output a packet signal, which is defined in a layer higher than the physical layer, to the packet processing unit 14. Here, a hello packet and a data packet are defined as the packet signal.

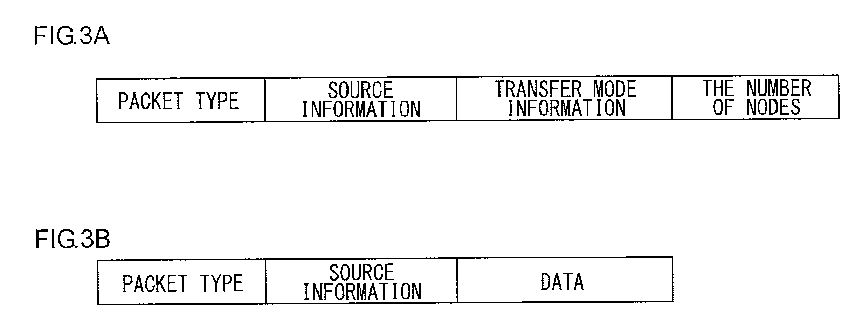

FIGS. 3A and 3B show packet formats in the communication system 100. FIG. 3A shows a format of hello packet, whereas FIG. 3B shows a format of data packet. In the hello packet, "packet type", "source information", "transfer mode information", and "the number of nodes" are assigned in this order from the top. "Packet type" is information indicating whether the packet signal is a hello packet or a data packet. Here, the hello packet is selected. "Source information" is information on a radio apparatus 10 that has transmitted the hello packet. For example, "source information" contains the identification ID of a radio apparatus 10 (hereinafter referred to as "node ID"), the present position thereof, the traveling speed thereof and so forth.

The information on the present position thereof and the traveling speed thereof is acquired by a not-shown vehicle using a known technique, and the thus acquired information is contained in the hello packet. "Transfer mode information" is the information on the radio apparatus 10 selected as the primary transfer mode. For example, the node ID of the radio apparatus 10 for which the primary mode is selected is contained therein. "The number of nodes" indicate the number of radio apparatuses 10 present, between the radio apparatus 10 that has sent the hello packet and said apparatus 10, and selected as the primary transfer mode. In FIG. 3B, "packet type" and "source information" are similar to those in the hello packet. The data packet is selected as "packet type". "Data" contains data to be transferred. Now, refer back to FIG. 2. In FIG. 1, it is assumed herein that the data packet is transferred rightward but the hello packet may also be broadcast leftward.

The packet processing unit 14 receives the packet signal from the packet receiver 20, and performs processing, such as transfer processing, which is carried out in an upper layer. The upper layer corresponds to a layer defined in a level higher than the physical layer. The packet processing unit 14 performs the following two processings (1) and (2) in particular. That is, (1) the packet processing unit 14 extracts the information, on the radio apparatus 10 that has sent the hello packet, from the hello packet and determines the transfer mode based on the extracted information. (2) The packet processing unit 14 transfers the received data packet according to the determined transfer mode. A description is given hereunder of the former processing.

The decision unit 26 receives the hello packet received by the packet receiver 20. Also, the decision unit 26 outputs it to the storage 16 by associating the information contained in the received hello packet with a radio apparatus 10 that has sent said hello packet. The storage 16 stores collectively the information outputted from the decision unit 26, in the form of a peripheral node information table. Though the data structure of the peripheral node information table will be discussed later, the peripheral node information table is generated based on the hello packets sent from a plurality of radio apparatuses 10. The decision unit 26 determines the transfer modes of other radio apparatuses 10, based on the peripheral node information table stored in the storage 16. More specifically, the decision unit 26 specifies a predetermined transfer direction as shown in FIG. 1.

The transfer direction corresponds to, for example, a rightward direction, which is to the right of the fifth radio apparatus 10e, in FIG. 1. When the transfer direction is specified, the positional information of said radio apparatus 10 and the positional information contained in the peripheral node information table are used. Of radio apparatuses 10 located along the transfer direction, the decision unit 26 selects a radio apparatus 10 located at a long distance away. For example, when the fifth radio apparatus 10e to the eighth radio apparatus 10h are contained in an area covering the transfer direction in FIG. 1, the decision unit 26 selects the eighth radio apparatus 10h. The decision unit 26 determines the setting of the primary transfer mode for the selected radio apparatus 10 and determines the setting of the secondary transfer mode for the remaining radio apparatuses 10. The thus determined transfer modes are also stored in the peripheral node information table.

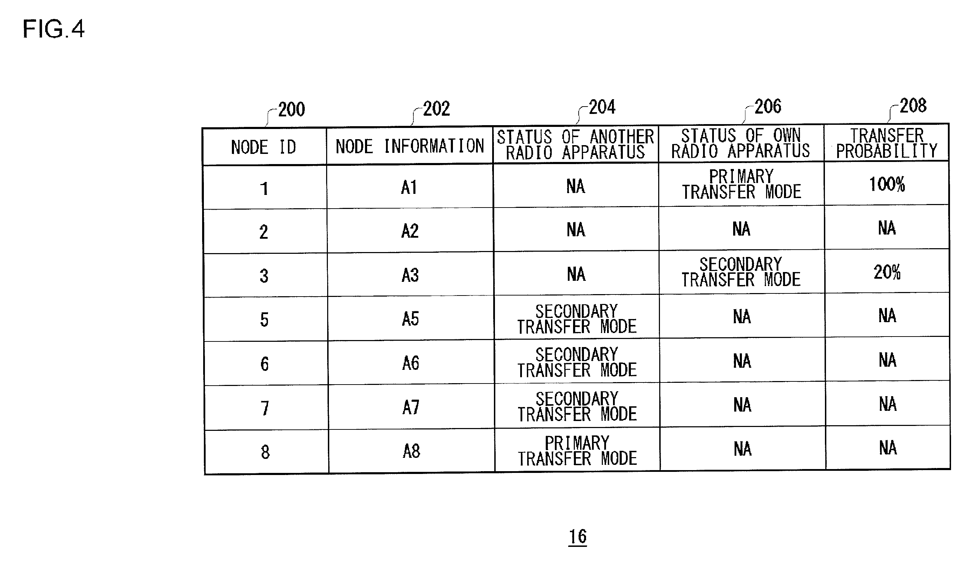

FIG. 4 illustrates a data structure of the peripheral node information table stored in the storage 16 of the fourth radio apparatus 10d. As shown in FIG. 4, the peripheral node information table contains a node ID space 200, a node information space 202, a status-of-another-radio-apparatus space 204, and a status-of-own-radio-apparatus space 206, and a transfer probability space 208. The node ID space 200 indicates the node IDs assigned to the radio apparatuses 10, and the node information space 202 indicates information on the radio apparatuses 10 associated with the node IDs. As described above, the information on the radio apparatuses 10 is the positional information and so forth and is denoted by "A1", for instance. The status-of-another-radio-apparatus space 204 indicates the transfer mode determined by the decision unit 26. That is, it is determined that the eighth radio apparatus 10h is set to the primary transfer mode, based on the node information "A8", and the fifth radio apparatus 10e to the seventh radio apparatus 10g are set to the secondary transfer mode. Note that since the rightward transfer is assumed in FIG. 1, the data packet transmitted from the fourth radio apparatus 10d is not transferred in the leftward direction and therefore the transfer to the first radio apparatus 10a through the third radio apparatus 10c is not available in FIG. 1. Accordingly, the first radio apparatus 10a through the third radio apparatus 10c are set to "NA".

The status-of-own-radio-apparatus space 206 indicates the transfer mode determined by not-shown other radio apparatuses 10. As shown in FIG. 4, the fourth radio apparatus 10d is set to the primary transfer mode by the first radio apparatus 10a, whereas it is set to the secondary mode by the third radio apparatus 10c. These pieces of information are contained in the hello packets sent from other radio apparatuses 10. In other words, the hello packet sent from the first radio apparatus 10a contains information indicating that the fourth radio apparatus 10d is set to the primary transfer mode. The transfer probability space 208 indicates the transfer probability in either the primary transfer mode or the secondary mode in association with the information indicated in the status-of-own-radio-apparatus space 206.

The packet generator 28 generates packet signals. If the packet signal is a hello signal, the packet generator 28 will reference the peripheral node information table stored in the storage 16 via the packet processing unit 14 and then extract a node ID whose status of another radio apparatus in FIG. 4 is the primary transfer mode. The packet generator 28 generates a hello packet by setting the extracted node ID in the transfer mode information of FIG. 3. Note that the timing with which the hello packet is to be generated is instructed by the control unit 18. The packet generator 28 outputs the generated packet signal to the packet transmitter 22. The packet transmitter 22 performs coding processing and modulation processing on the packet signal sent from the packet generator 28. The packet transmitter 22 carries out frequency conversion of the modulated packet signal from the baseband domain into the radiofrequency domain, and then transmits the frequency-converted packet signal. If the packet signal to be transmitted is a hello packet, the above-described processing will be equivalent to conveying a transfer mode determined by the decision unit 26.

Next, a description is given of a processing that transfers the received data packet. As described above, the packet receiver 20 receives the hello packet from another radio apparatus 10 wherein this hello packet contains the information on the transfer mode used when the data packet received from another radio apparatus 10 is transferred. This information corresponds to the transfer mode information and, as described above, it also corresponds to the node ID of the primary transfer mode selected by the another radio apparatus 10. Note that the information on the transfer mode is received from a plurality of other radio apparatuses 10, respectively. The setting unit 24 stores the information on the transfer mode in the peripheral node information table of the storage 16. This corresponds to the information indicated in the status-of-own-radio-apparatus space 206 of FIG. 4.

The setting unit 24 sets the transfer mode, based on the information concerning the transfer mode stored in the storage 16. More specifically, in the case of FIG. 4, the fourth radio apparatus 10d is set to the primary transfer mode by the first radio apparatus 10a. Accordingly, if the packet receiver 20 receives a data packet sent from the first radio apparatus 10a, the setting unit 24 will set the primary transfer mode, as the transfer mode, for the packet generator 28 and the packet transmitter 22. Here, the setting unit 24 identifies the source of the data packet, based on the source information of FIG.3B. If, on the other hand, the packet receiver 20 receives a data packet sent from the third radio apparatus 10c, the setting unit 24 will set the secondary transfer mode, as the transfer mode, for the packet generator 28 and the packet transmitter 22. If the packet receiver 20 receives a data packet sent from the second radio apparatus 10b, the setting unit 24 will perform setting such that no forwarding is enabled by the packet generator 28 and the packet transmitter 22. That is, the setting unit 24 sets the transfer modes for a plurality of other radio apparatuses 10, respectively.

If the primary transfer mode is set, the packet generator 28 will generate a data packet with a probability of 100%, based on the received packet and then output the generated packet to the packet transmitter 22. At that time, the packet generator 28 has the information on the fourth radio apparatus 10d, which is the node ID of the fourth radio apparatus 10d, for instance, contained in the source information of FIG. 3B. If, on the other hand, the secondary transfer mode is set, the packet generator 28 will generate a data packet with a probability of 20%. For example, the packet generator 28 is equipped with a not-shown counter, and the packet generator 28 generates the data packet whenever the value counted by the counter becomes an integral multiple of 5. Also, the packet transmitter 22 transmits the thus generated data packet by broadcast. That is, the packet transmitter 22 transfers the data packet received from another radio apparatus 10, using the transfer mode set by the setting unit 24. It is defined herein that the transfer probability of the primary transfer mode is higher than the transfer probability of the secondary transfer mode. The control unit 18 controls the operation of the radio apparatus 10 and, for example, the control unit 18 controls the timing with which the hello packet is transmitted. For example, the control unit 18 controls the transmission timing in such a manner that the hello packet is transmitted at regular intervals.

This structure may be implemented hardwarewise by elements such as a CPU, memory and other LSIs of an arbitrary computer, and softwarewise by memory-loaded programs having communication functions or the like. Depicted herein are functional blocks implemented by cooperation of hardware and software. Therefore, it will be obvious to those skilled in the art that the functional blocks may be implemented by a variety of manners including hardware only, software only or a combination of both.

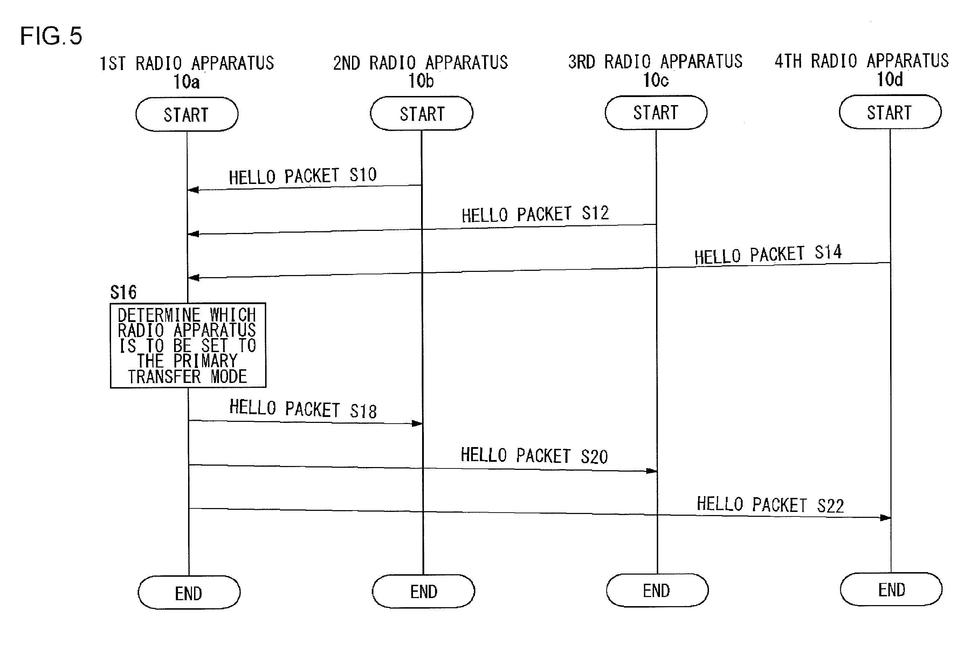

An operation of the communication system 100 structured as above is now described. FIG. 5 is a sequence diagram showing a procedure for transmitting a hello packet in the communication system 100. The first radio apparatus 10a receives a hello packet sent from the second radio apparatus 10b (S10). Also, the first radio apparatus 10a receives hello packets sent from the third radio apparatus 10c and the fourth radio apparatus 10d, respectively (S12, S14). Based on the received hello packets, the first radio apparatus 10a determines which radio apparatuses 10 are to be set to the primary transfer mode (S16), and has the information on the radio apparatuses 10 to which the primary transfer mode is effected, contained in the hello packet.
It is assumed here that the fourth radio apparatus 10d is determined to be set to the primary transfer mode. The first radio apparatus 10a transmits a hello packet to the second radio apparatus 10b to the fourth radio apparatus 10d by broadcast (S18 to S22). Though, for convenience, Step 18 to Step 22 are described as separate steps to be performed here, a single hello packet is actually transmitted by broadcast from the first radio apparatus 10a.

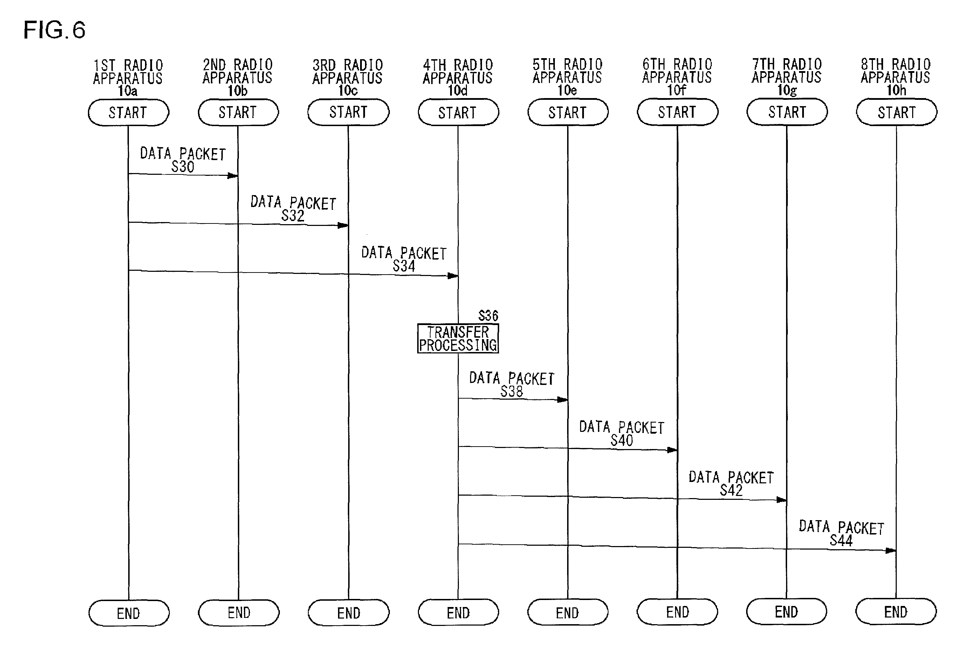

FIG. 6 is a sequence diagram showing a procedure for transferring a data packet in the communication system 100. FIG. 6 shows a processing performed subsequent to that of FIG. 5. The first radio apparatus 10a transmits a data packet by broadcast, and then this data packet is received by the second radio apparatus 10b to the fourth radio apparatus 10d (S30 to S34). Though, for convenience, Step 30 to Step 34 are described as separate steps to be performed here, a single hello packet is actually transmitted by broadcast from the first radio apparatus 10a. Since the fourth radio apparatus 10d is set to the primary transfer mode, the transfer processing is performed (S36). The fourth radio apparatus 10d transmits the data packet by broadcast, and then this data packet is received by the fifth radio apparatus 10e to the eighth radio apparatus 10h (S38 to S44).

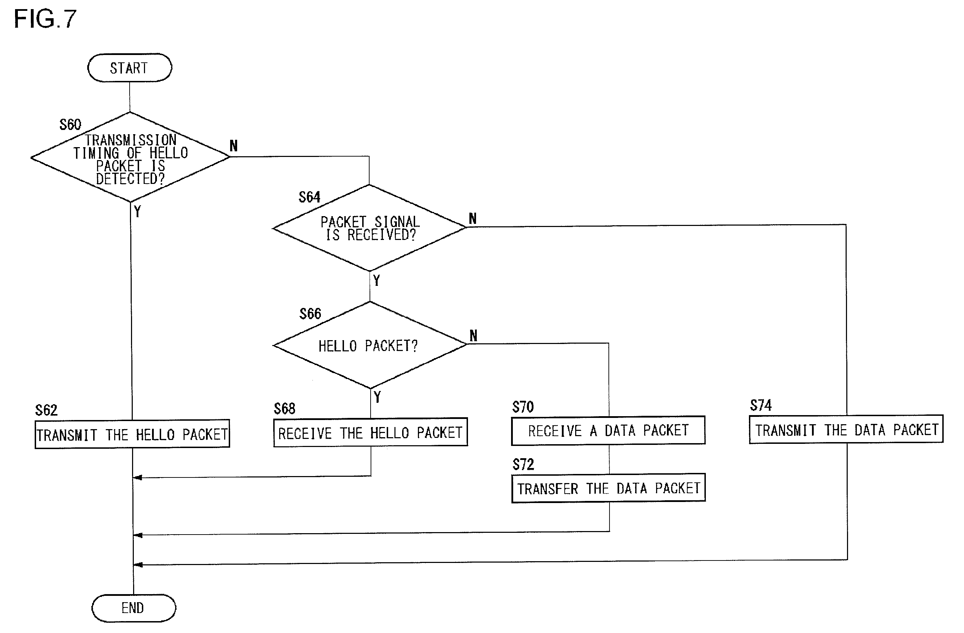

FIG. 7 is a flowchart showing a communication procedure in a radio apparatus 10. As the control unit 18 detects the transmission timing of a hello packet (Y of S60), the packet generator 28 generates a hello packet and then the packet transmitter 22 transmits the hello packet (S62). If the control unit 18 does not detect the transmission timing of a hello packet (N of S60) and the packet receiver 20 receives a packet signal (Y of S64) and if this packet signal is a hello packet (Y of S66), the packet receiver 20 and the packet processing unit 14 will receive the hello packet (S68). If, on the other hand, this packet signal is not a hello packet (N of S66), the packet receiver 20 and the packet processing unit 14 will receive a data packet (S70) and then the packet generator 28 and the packet transmitter 22 will transfer the data packet (S72). If the packet receiver 20 does not receive the packet signal (N of S64), the packet generator 28 and the packet transmitter 22 will transmit the data packet (S74).

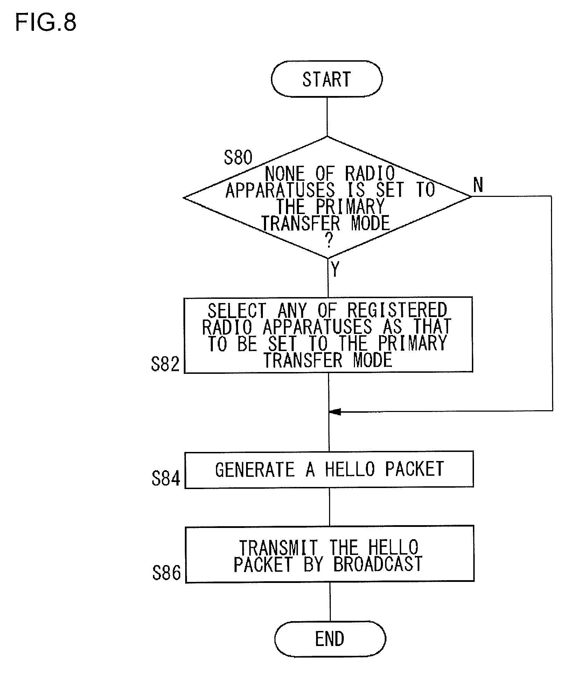

FIG. 8 is a flowchart showing a procedure for transmitting a hello packet in a radio apparatus 10. FIG. 8 corresponds to Step 62 of FIG. 7. If, as the status of another radio apparatus in the peripheral node information table, there is no radio apparatus 10 to which the primary transfer mode is set (Y of S80), the decision unit 26 will select any of the radio apparatuses 10, enrolled in the peripheral node information table, as the radio apparatus to be set to the primary transfer mode (S82). If, on the other hand, as the status of another radio apparatus in the peripheral node information table there is at least one radio apparatus 10 to which the primary transfer mode is set (N of S80), Step 82 will be skipped. Then, the packet generator 28 generates a hello packet while the information on the radio apparatus 10 corresponding to the primary transfer mode is being incorporated into the hello packet (S84). The packet transmitter 22 transmits the hello packet by broadcast (S86).

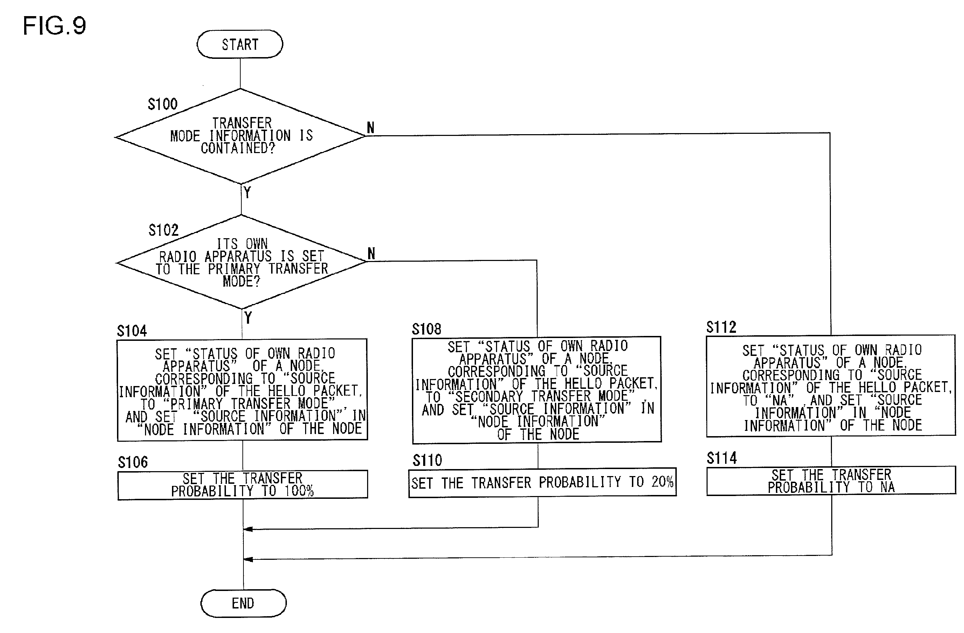

FIG. 9 is a flowchart showing a procedure for setting a transfer mode in a radio apparatus 10. FIG. 9 corresponds to Step 68 of FIG. 7. If the transfer mode information is contained in the hello packet (Y of S100) and if the node ID contained in the transfer mode information is its own node ID, namely if its own radio apparatus is set to the primary transfer mode (Y of S102), the setting unit 24 will operate as follows. The setting unit 24 sets the "status of own radio apparatus" of the node ID, corresponding to the "source information" of the hello packet, to the "primary transfer mode" in the peripheral node information table, and sets the "source information" in the "node information" of said node ID (S104). Further, the setting unit 24 sets the transfer probability of the node ID, corresponding to the "source information" of the hello packet, to "100%" (S106).

If, on the other hand, its own radio apparatus is not set to the primary transfer mode (N of S102), the setting unit 24 will set the "status of own radio apparatus" of the node ID, corresponding to the "source information" of the hello packet, to the "secondary transfer mode" in the peripheral node information table, and set the "source information" in the "node information" of said node ID (S108). Further, the setting unit 24 sets the transfer probability of the node ID, corresponding to the "source information" of the hello packet, to "20%" (S110). If the transfer mode information is not contained in the hello packet (N of S100), the setting unit 24 will set the "status of own radio apparatus" of the node ID, corresponding to the "source information" of the hello packet, to "NA" in the peripheral node information table, and set the "source information" in the "node information" of said node ID (S112). Further, the setting unit 24 sets the transfer probability of the node ID, corresponding to the "source information" of the hello packet, to "NA" (S114).

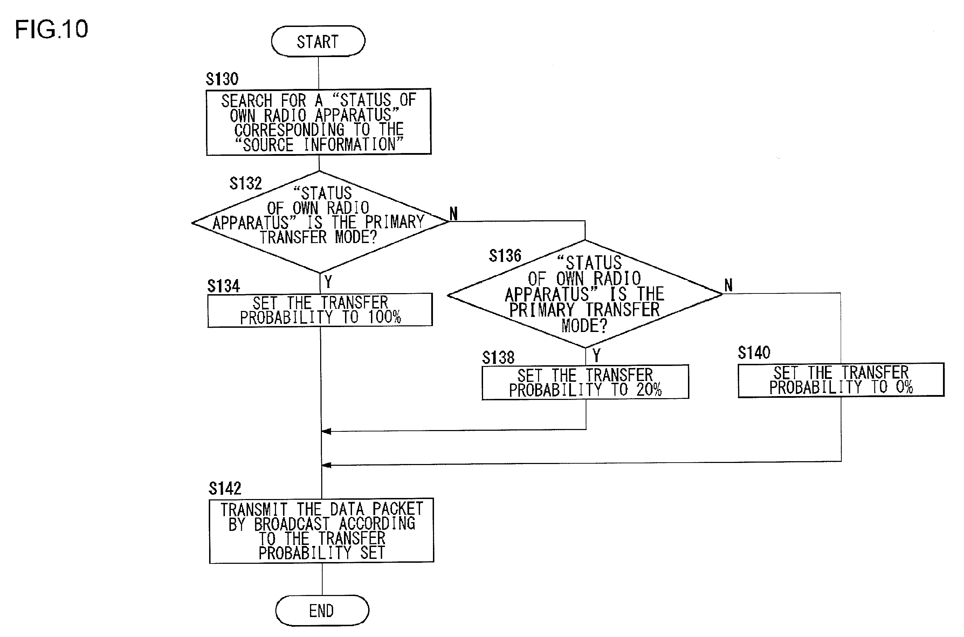

FIG. 10 is a flowchart showing a transfer procedure in a radio apparatus 10. FIG. 10 corresponds to Step 72 of FIG. 7. The packet processing unit 14 searches for a "status of own radio apparatus" of the node ID corresponding to the "source information" of the data packet (S130). If the "status of own radio apparatus" is the primary transfer mode (Y of S132), the setting unit 24 will set the transfer probability to 100% (S134). If, on the other hand, the "status of own radio apparatus" is not the primary transfer mode (N of S132) but the secondary transfer mode (Y of S136), the setting unit 24 will set the transfer probability to 20% (S138). If the "status of own radio apparatus" is not the secondary transfer mode (N of S136), the setting unit 24 will set the transfer probability to 0% (S140). The packet generator 28 and the packet transmitter 22 transmit the data packet by broadcast according to the transfer probability set (S142).

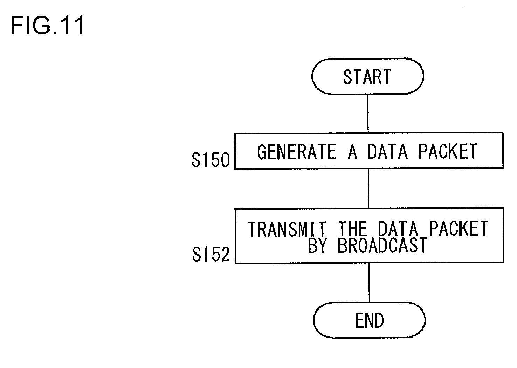

FIG. 11 is a flowchart showing a procedure for transferring a data packet in a radio apparatus 10. FIG. 11 corresponds to Step 74 of FIG. 7. The packet generator 28 generates a data packet (S150). The packet transmitter 22 transmits the data packet by broadcast (S152).

A description is given hereinbelow of a modification. The modification relates also to the same communication system as that described in the exemplary embodiment where the data packet is transferred by setting the primary transfer mode and the secondary transfer mode for radio apparatuses. Here, a description is given of a processing performed when, in a radio apparatus to which the primary transfer mode has been set (hereinafter, this radio apparatus will be referred to as "primary-transfer radio apparatus"), a missing packet or error is detected in a data packet to be transferred. A primary-transfer radio apparatus transmits a NACK (Negative ACKnowledgement) packet, which is a retransmission request signal, to a radio apparatus that has sent the original packet (hereinafter, this apparatus will be referred to as "source radio apparatus"). As a result, the source radio apparatus retransmits the data packet. At that time, a transfer processing similar to the above-described transfer processing is performed. Thus, there is a possibility that the data packet loss or error may again occur in the primary-transfer radio apparatus. For example, if a radio apparatus to which the secondary transfer mode has been set (this radio apparatus will be hereinafter referred to as "secondary-transfer radio apparatus") does not retransfer it and if data packet error occurs again in a path leading from the source radio apparatus to the primary-transfer radio apparatus, the data packet may be lost again.

In the light of the foregoing, the communication system according to the modification performs the following processing. The source radio apparatus transmits a data packet, and the data packet is received by primary-transfer apparatuses and secondary-transfer apparatuses. Even though the secondary-transfer radio apparatus does not transfer the data packet, it stores the data packet for a predetermined period of time. When a primary-transfer radio apparatus detects a missing data packet or the like, it transmits a NACK packet. The NACK packet is received by a secondary-transfer radio apparatus. If the secondary-transfer radio apparatus stores a data packet corresponding to the NACK packet, it will transfer this data packet to the primary-transfer apparatus.

The communication system 100 according to the modification is of the same type as that shown in FIG. 1, and the radio apparatus 10 according to the modification is of the same type as that shown in FIG. 2. A description is now given centering around the difference. For clarity of description, it is assumed here that, in the structural components of the communication system shown in FIG. 1, the first radio apparatus 10a corresponds to a source radio apparatus, the third radio apparatus 10c a secondary-transfer radio apparatus, and the fourth radio apparatus 10d a primary-transfer radio apparatus. The packet receiver 20 sequentially receives data packets sent from the source radio apparatus.

The packet processing unit 14 checks if there is the loss of or error in a data packet or not. For example, the data packets contain continuous sequence numbers therein, respectively, and the packet processing unit 14 checks to see if the sequence numbers contained in the data packets received sequentially are contiguous. If the sequence numbers are not contiguous, the packet processing unit 14 will identify the missing sequence numbers. Also, if error is contained in a data packet, the packet processing unit 14 will identify the sequence numbers contained in the data packet. The packet processing unit 14 outputs the thus identified sequence numbers to the packet generator 28. Upon receipt of the sequence numbers, the packet generator 28 generates a NACK packet signal.

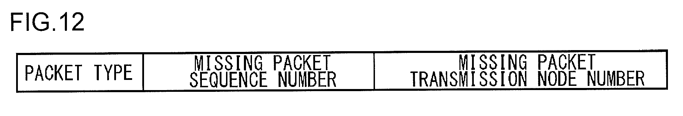

FIG. 12 shows a format of NACK packet in the communication system 100 according to the modification. As shown in FIG. 12, "packet type", "missing packet sequence number", and "missing packet transmission node number" are assigned in the NACK packet from top. The "packet type" contains information indicating a NACK packet, in the place of the aforementioned content. The NACK packet also contains the sequence number identified as a missing packet sequence by the packet processing unit 14. The "missing packet transmission node number " contains the identification number of a secondary-transfer radio apparatus to which the data packet is to be transmitted. In the example described earlier, the "missing packet transmission node number" contains the identification number of the third radio apparatus 10c. It is presupposed here that the packet generator 28 recognizes beforehand which particular radio apparatus 10 is the secondary-transfer apparatus. Note that the packet generator 28 may set the "missing packet transmission node number" to null; in such a case, no radio apparatus is specified as a secondary transfer radio apparatus which is to transfer the data packet. Refer back to FIG.2. The packet transmitter 22 transmits the NACK packet generated by the packet generator 28.

The packet receiver 20 in the secondary-transfer radio apparatus receives the data packet sent from the source radio apparatus. Even though the packet generator 28 does not generate the data packet to be transferred, the packet processing unit 14 stores the data packet received by the packet receiver 20, in the storage 16. The storage 16 stores the data packet sent from the source radio apparatus, for a predetermined period of time. Here, the predetermined period of time may be a certain prefixed period of time or may be set variably depending on the quality of the received data packet.

The packet receiver 20 also receives a NACK packet sent from the primary-transfer radio apparatus. When the NACK packet is received by the packet receiver 20, the packet processing unit 14 detects a retransmission request sent from the primary-transfer apparatus. The packet processing unit 14 checks to see if the missing packet transmission node number contained in the NACK packet corresponds to its own radio apparatus. If the missing packet transmission node number belongs to another radio apparatus 10, the packet processing unit 14 will terminate the processing. If, on the other hand, the missing packet transmission node number indicates its own radio apparatus or it is set to null, the packet processing unit 14 will verify whether the data packet corresponding to the missing packet sequence number is stored in the storage 16 or not.

Here, the case in which the missing packet transmission node number is null means that all of the secondary-transfer radio apparatuses which have received the NACK packet transmit the data packets. If the data packet is stored in the storage 16, the packet processing unit 14 will output the data packet to the packet generator 28. The packet generator 28 outputs the data packet received from the packet processing unit 14, to the packet transmitter 22. The packet transmitter 22 transmits the data packet. That is, if the NACK packet is detected by the packet processing unit 14 and if a data packet corresponding to the missing packet sequence number is stored in the storage 16, the packet transmitter 22 will transmit this data packet.

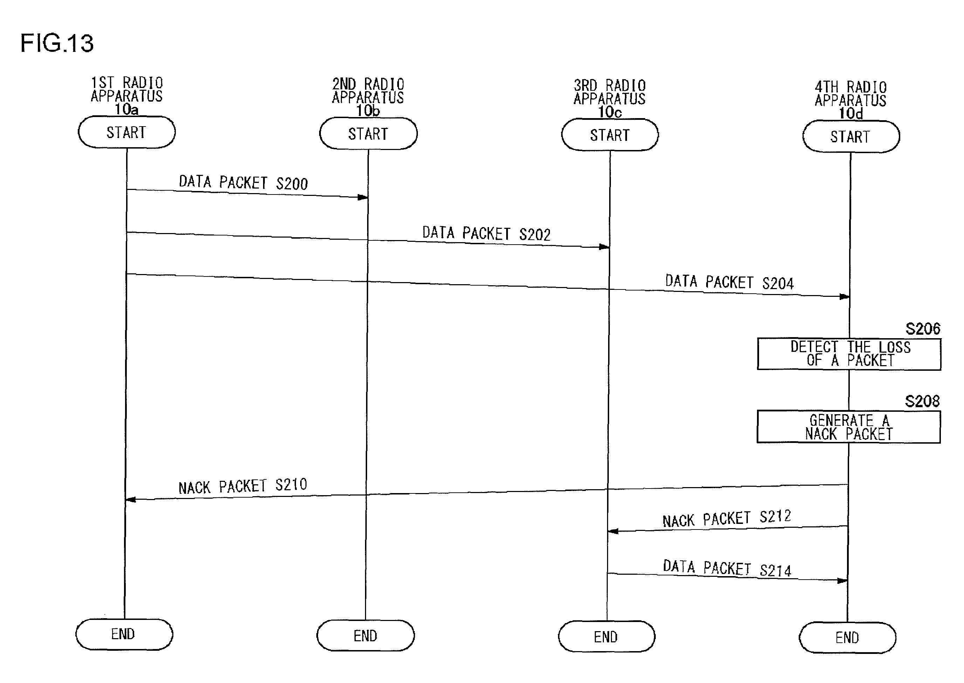

An operation of the communication system 100 structured as above is now described. FIG. 13 is a sequence diagram showing a retransmission procedure in the communication system 100 according to the modification. The first radio apparatus 10a transmits a data packet by broadcast, and said data packet is received by the second radio apparatus 10b to the fourth radio apparatus 10d (S200 to S204). Though, for convenience, Step 200 to Step 204 are described as separate steps to be performed here, a single data packet is actually transmitted by broadcast from the first radio apparatus 10a. The fourth radio apparatus 10d detects the loss of packet(s) (S206) and generates a NACK packet (S208). The fourth radio apparatus 10d transmits the NACK packet by broadcast, and this data packet is received by the first radio apparatus 10a and the third radio apparatus 10c (S210, S212). Though, for convenience, Step 210 and Step 212 are described as separate steps to be performed here, a single data packet is actually transmitted by broadcast from the fourth radio apparatus 10d. The third radio apparatus 10c transmits a data packet stored therein (S214).

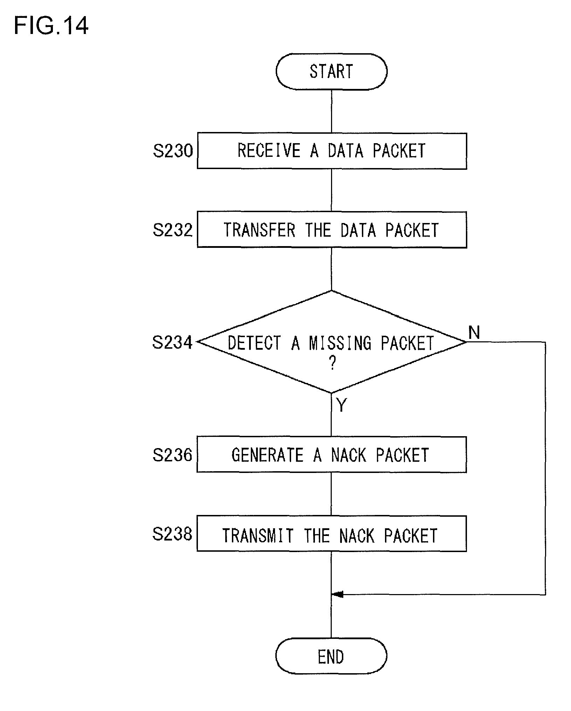

FIG. 14 is a flowchart showing a procedure for transmitting a NACK packet in a radio apparatus 10 according to the modification. This procedure corresponds to a processing performed by a primary-transfer radio apparatus. The packet receiver 20 receives a data packet (S230). The packet processing unit 14, the packet generator 28 and the packet transmitter 22 transfer the data packet (S232). If the packet processing unit 14 detects a missing packet (Y of S234), the packet generator 28 will generate a NACK packet (S236) and the packet transmitter 22 will transmit the NACK packet (S238). If, on the other hand, no missing packet is detected by the packet processing unit 14 (N of S234), the processing will be terminated.

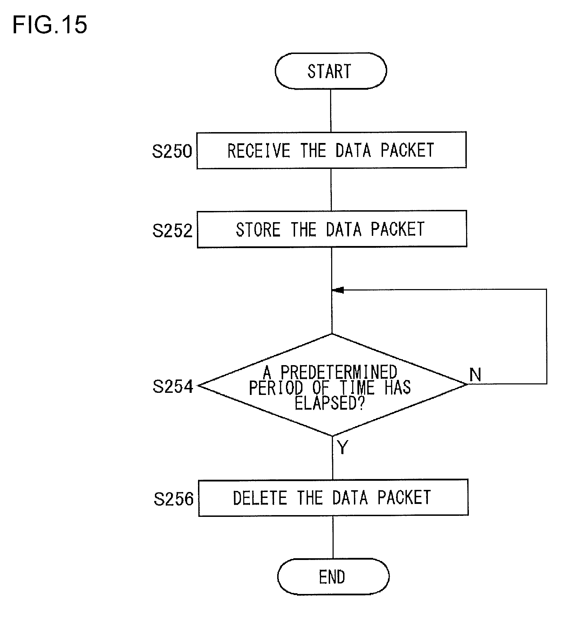

FIG. 15 is a flowchart showing a procedure for storing a data packet in a radio apparatus 10 according to the modification. This procedure corresponds to a processing performed by a secondary-transfer radio apparatus. The packet receiver 20 receives a data packet (S250). The storage 16 stores the data packet (S252). If a predetermined period of time has not yet elapsed (N of S254), the packet processing unit 14 will stand ready. If, on the other hand, the predetermined period of time has elapsed (Y of S254), the packet processing unit 14 will delete the data packet (S256).

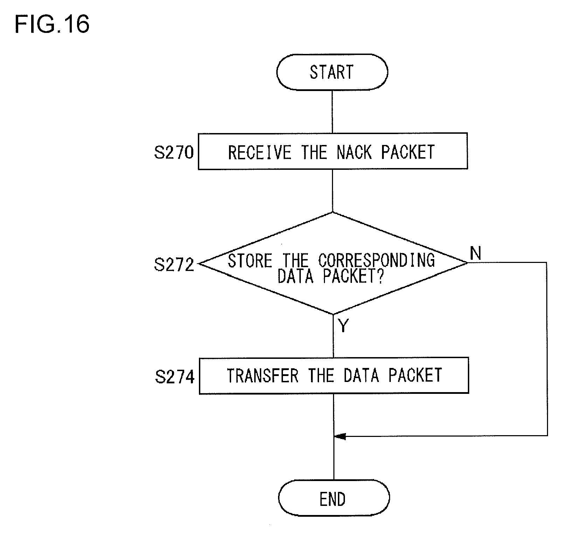

FIG. 16 is a flowchart showing a procedure for transferring a data packet in a radio apparatus 10 according to the modification. This procedure corresponds to a processing performed by a secondary-transfer radio apparatus and corresponds to a case where the missing packet transmission node number is set to null. The packet receiver 20 receives a NACK packet (S270). If a corresponding data packet is stored in the storage 16 (Y of S272), the packet transmitter 22 will transmit the data packet (S274). If the corresponding data packet is not stored in the storage 16 (N of S272), the processing will be terminated.

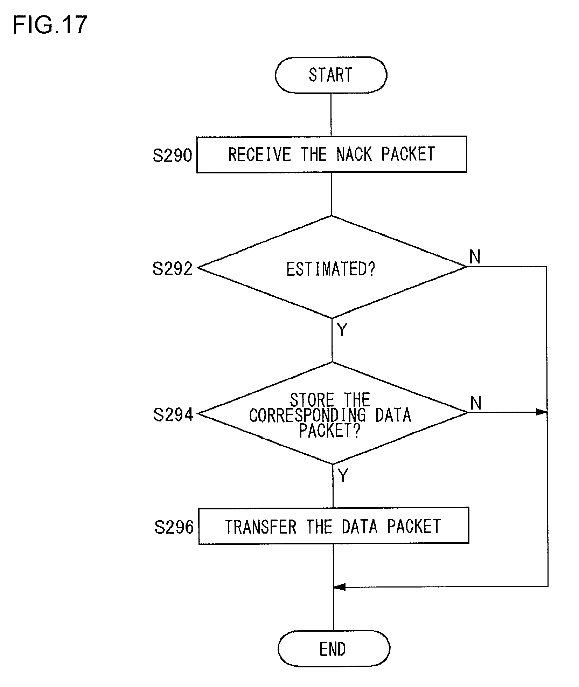

FIG. 17 is a flowchart showing another procedure for transferring a data packet in a radio apparatus 10 according to the modification. This procedure corresponds to a processing performed by a secondary-transfer radio apparatus and corresponds to a case where the missing packet transmission node number is not set to null. The packet receiver 20 receives a NACK packet (S290). If a missing packet is specified by a missing packet transmission node number (Y of S292) and if the corresponding data packet is stored in the storage 16 (Y of S294), the packet transmitter 22 will transmit the data packet (S296). If the missing packet is not specified by a missing packet transmission node number (N of S292) or if the corresponding data packet is not stored in the storage 16 (N of S294), the processing will be terminated.

By employing the exemplary embodiment of the present invention, the transfer mode is set based on the instruction sent from another radio apparatus and there is also available a transfer mode wherein the transfer probability thereof is lower, so that the increase in the traffic volume required when the packet signals are transferred can be reduced. Also, either the primary transfer mode or the secondary transfer mode is set to each radio apparatus as the transfer mode, so that a predetermined transfer mode can be executed for each radio apparatus that has received a data packet. Since a predetermined transfer mode is executed for each radio apparatus that has received the data packet, various routes can be used and dealt with. The secondary transfer mode is also defined, so that should error occur in the primary transfer mode, said error can be repaired. Also, since the same hello packet is used to set and convey the transfer mode and for other purposes, the transfer efficiency is improved. Also, since the primary transfer mode is set for radio apparatuses located far away, the number of transfers can be reduced. Since the number of transfers is reduced, the increase in the traffic volume required when the packet signals are transferred can be reduced. When data packets are lost, the data packets are transmitted to a radio apparatus to which the secondary transfer mode has been set. Thus the probability that the data packets may be lost again can be reduced. Since the probability that the data packets may be lost again can be reduced, the number of retransmissions of data packets can be reduced. Since the number of retransmissions of data packets is reduced, the throughput can be improved.

The present invention has been described based on the exemplary embodiment. The exemplary embodiment is intended to be illustrative only, and it is understood by those skilled in the art that various modifications to constituting elements and processes could be developed and that such modifications are also within the scope of the present invention.

In the exemplary embodiment of the present invention, the decision unit 26 sets the primary transfer mode to the radio apparatuses located at a long distance. When the decision unit 26 sets the primary transfer mode thereto, the positional information is referenced. The exemplary embodiment is, however, not limited to this and, for example, the decision unit 26 may measure the received power of the hello packet received by the packet receiver 20 and set the transfer mode based on the received power. For instance, the decision unit 26 selects a minimum value of received powers of hello packets sent from a plurality of other radio apparatuses 10 wherein the value selected is also greater than a threshold value. Further, the decision unit 26 sets the primary transfer mode to other radio apparatuses 10 associated with the selected value. Here, the threshold value is determined in advance by experiments and the like in a manner such that a margin for channel fluctuations is taken into consideration. According to the present modification, the transfer mode can be set without any positional information.

In the exemplary embodiment of the present invention, the setting unit 24 defines the transfer probability of the primary transfer mode to be "100%". The exemplary embodiment is, however, not limited thereto and, for example, the setting unit 24 may define the transfer probability of the primary transfer mode to be a value other than "100%". According to the present modification, the transfer probability can be flexibly set. In other words, it is only necessary that the transfer probability of the primary transfer mode is higher than that of the secondary transfer mode.

In the exemplary embodiment of the present invention, the setting unit 24 defines the transfer probability as a fixed value. The exemplary embodiment is, however, not limited thereto and, for example, the setting unit 24 may determine the transfer probability based on the "number of nodes" contained in the hello packet. In so doing, when there is a larger number of nodes, the setting unit 24 sets the transfer probability to a value less than the transfer probability set when the number of nodes is smaller. According to the present modification, even though there is a large number of nodes, the transfer probability is set to a low value, so that the increase in the traffic volume can be reduced. Also, the setting unit 24 may set the transfer probability in consideration of radio conditions such as a data traffic volume and an error rate, in addition to the "number of nodes". If the data traffic volume is used, the setting unit 24 will select a smaller value of the transfer probability as the data traffic volume becomes larger. Also, the setting unit 24 selects a smaller value of the transfer probability as the radio condition becomes more desirable. According to the present modification, the transfer probability suitable for the surrounding environment can be set. In other words, it is only necessary that the transfer probability of the primary transfer mode is set higher than the transfer probability of the secondary transfer mode.

### INDUSTRIAL APPLICABILITY

The increase in the traffic volume is reduced when packet signals are to be forwarded.

## Claims

1. A radio apparatus, comprising:
a receiving unit configured to receive an instruction, sent from another radio apparatus, as to a transfer mode used when a data signal received from the another radio apparatus is to be transferred;
a setting unit configured to set the transfer mode based on the instruction received by said receiving unit; and
a communication unit configured to transfer the data signal received from the another radio apparatus, according to the transfer mode set by said setting unit,
wherein the setting unit sets a primary transfer mode or a secondary transfer mode as the transfer mode, and the probability of carrying out a transfer by said communication unit is set so that the probability thereof in the primary transfer mode is higher than that in the secondary transfer mode.

2. A radio apparatus according to Claim 1, wherein said receiving unit receives instructions as to transfer modes corresponding respectively to a plurality of other radio apparatuses, from the plurality of other radio apparatuses, and
wherein said setting unit sets the transfer modes corresponding respectively to the plurality of other radio apparatuses.

3. A radio apparatus according to Claim 1, further comprising:
a storage configured to store a data signal, which is sent from a source radio apparatus and received by said communication unit, for a predetermined period of time, and
a detector configured to detect a retransmission request signal, when said setting unit sets the secondary transfer mode based on the instruction which is sent from the source radio apparatus and is received by said receiving unit, the retransmission request being set by a radio apparatus to which the primary transfer mode is set by the source radio apparatus via said communication unit,
wherein when the retransmission request signal is detected by said detector and a data signal corresponding to the retransmission request signal is stored in said storage, said communication unit transmits said data signal.

4. A radio apparatus according to Claim 1 or Claim 2, further comprising:
a receiver configured to receive a broadcast signal from the another radio apparatus;
a decision unit configured to determine the transfer mode for the another radio apparatus, based on the broadcast signal received by said receiver; and
a notification unit configured to convey the transfer mode determined by said decision unit.

5. A communication method, comprising:
receiving an instruction, sent from another radio apparatus, as to a transfer mode used when a data signal received from the another radio apparatus is to be transferred;
setting the transfer mode based on the received instruction received; and
transferring the data signal received from the another radio apparatus, according to the transfer mode set by said setting,
wherein said setting sets a primary transfer mode or a secondary transfer mode as the transfer mode, and the probability of carrying out a transfer in said transferring is set so that the probability thereof in the primary transfer mode is higher than that in the secondary transfer mode.
